# EUROPÄISCHE PATENTSCHRIFT

(11) **EP 0 471 170 B1**
(45) Veröffentlichungstag und Bekanntmachung des Hinweises auf die Patenterteilung: **11.10.1995**
(21) Anmeldenummer: 91110436.2
(22) Anmeldetag: 25.06.1991
(51) Int. Cl.: B65G 61/00, B65G 59/04, B65G 47/91

(54) **Verfahren zum Heben von unverschlossenen Faltschachteln mittels Sauggreifer**
Method for lifting unclosed folded boxes with a suction device
Procédé pour soulever des emballages pliés non-fermés à l'aide d'un dispositif de préhension par dépression

(30) Priorität: 16.08.1990 DE 4025846
(43) Veröffentlichungstag der Anmeldung: 19.02.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Boldt, Gerhard, Dipl.-Ing., W-4600 Dortmund 1 (DE)

(56) Entgegenhaltungen:
- EP-A- 0 124 673
- EP-A- 0 181 620
- FR-A- 2 376 807
- GB-A- 2 156 762
- US-A- 3 861 732
- US-A- 3 920 128

## Beschreibung

Die Erfindung bezieht sich auf ein Verfahren zum Heben von unverschlossenen Faltschachteln.

Aus der US-A-3 920 128 ist eine Einrichtung zum Heben von verschiedenen Gegenständen bekannt. Die Sauggreifer der Einrichtung sind mit Mitteln versehen, welche eine Aufnahme auch von auf einer Unterlage schräg angeordneten Bauteilen erlauben. Die Einrichtung eignet sich insbesondere zum Heben von geschlossenen Gegenständen.

Daneben ist aus der GB-A-2 156 762 eine weitere Sauggreifer-Einrichtung zum Heben und Transportieren von insbesondere Bäckerei-Produkten bekannt, bei der die zu hebenden Gegenstände während des Hebvorgangs mittels Sauggreifer seitlich durch eine weitere Vorrichtung unterstützt werden.

Weitere Hebevorrichtungen sind z.B. aus der DE-A-36 18 704 und der DE-A-23 57 206 bekannt. In der DE-A-36 18 704 ist eine Hebevorrichtung mit einem Saugkasten, der einen Sauganschluß aufweist, an dem insbesondere ein durch Unterdruck verkürzbarer Saugschlauch anzuschließen ist, beschrieben. Sie ist zum Erfassen eines zu transportierenden Gegenstandes durch Unterdruck ausgebildet, mit einem die Verbindung zwischen dem Inneren des Saugkastens und dessen Außenseite wahlweise herstellenden Ventil, das vom Benutzer über eine Handhabe zu öffenen ist, wobei das Ventil ein Schieberventil ist. In der DE-A-23 57 206 wird ein Vacuum-Hubgerät mit einstellbarer Haftschale beschrieben, das zum Heben von Körpern mit gekrümmter Oberfläche verwendet wird und sich automatisch der Krümmung des zu hebenden Gegenstandes anpaßt.

Die Verwendung dieser bekannten Sauggreifer läßt sich jedoch bei offenen Faltschachteln mit zwei Deckelhälften auf der Faltschachteloberfläche nicht realisieren. Setzt man die Sauggreifer auf die Deckel der nicht verschlossenen Faltschachtel auf und betätigt die Vakuumpumpen, um einen Sogeffekt auf die Deckel zu erzielen, und würde man jetzt die Sauggreifer anheben, so würden sich die Deckel der offenen Faltschachtel aufstellen und die Sauger sich von den Deckeln abschälen, womit die Möglichkeit, unverschlossene Faltschachteln zu handhaben, nicht gegeben wäre. Benutzerseitig besteht jedoch häufig der Wunsch, den Deckel der Faltschachtel unverschlossen zu lassen, also lediglich zugeklappt, und nicht etwa durch Drahthaftung, Laschenklebung, Klebestreifen, Umschnürung oder Umreifen zu verschließen und diese unverschlossenen Faltschachteln zu handhaben. Vor allem ließe sich eine Automatisierung durchführen, was bisher nicht möglich ist, aber aufgrund der starken Verwendung von Faltschachteln als Packmittel wünschenswert wäre.

Der Erfindung liegt die Aufgabe zugrunde, ein Verfahren anzugeben, das es ermöglicht, unverschlossene Faltschachteln mit vorzugsweise mindestens zwei Deckelhälften auf der Faltschachteloberfläche mit Hilfe eines Greifers, der mit der Saugtechnik arbeitet, sicher zu erfassen, ohne daß die offene Faltschachtel dabei von Sauggreifern abrutscht oder so starke Verformungen erleidet, so daß sie aufplatzt.

Insbesondere erlaubt das beschriebene Verfahren, nicht verschlossene Faltschachteln aus einer Palette von oben völlig wahllos zu entnehmen, d.h. eine gesamte Palette kann ohne eine bestimmte Reihenfolge depalettiert werden. Da der Zugriff von oben erfolgt, kann von den Schachteln, die eine freie Faltschachteloberfläche haben, irgendeine beliebige zum Anheben ausgewählt werden. Dies war bisher nur manuell möglich, weil die offenen Faltschachteln zum einen eine geringe Formstatibilität aufweisen und zum anderen der Zugriff lediglich auf eine bis drei Flächen möglich ist. Das erfindungsgemäße Verfahren wird wie folgt durchgeführt:
Der Sauggreifer wird auf den Deckel der unverschlossenen Faltschachtel aufgesetzt. Die Valkuumpumpen werden aktiviert, was ein Verhaften zwischen den Deckeln der Faltschachtel und den Sauggreifern zur Folge hat. Werden die bereits am Deckel verhafteten Sauggreifer, und damit also die bereits nahe der Schachtelkante positionierten und aktivierten Sauggreifer, zueinander verschoben, was durch bewegbar gestaltete Sauggreifer ermöglicht wird, und zwar derart, daß sich der bewegbar gestaltete Sauggreifer annähernd parallel zur Faltschachteloberfläche von der jeweiligen Faltschachtelkante nach innen verschiebt, so wird, da die mit den Deckeln fest verhaftenden Sauggreifer ihre Lage bezüglich der Deckel, an denen sie greifen, nicht verändern, an der Faltschachtel eine Kraft ausgeübt, die zu einer Verspannung führt. In der bereits beschriebenen Art und Weise ermöglicht genau diese Verspannung eine Handhabung der nicht verschlossenen Faltschachtel. Überraschenderweise wird durch eben diese Verspannung, die durch die von den Sauggreifern kommenden Querkräfte hervorgerufen wird, ein Ausbeulen der Schachteldeckel und ein damit verbundenes Loslösen der Schachtel von den Sauggreifern während des Anhebevorganges verhindert, und es ist möglich, die Faltschachtel durch Saugeffekte auf die Deckel der nichtverschlossenen Faltschachtel sicher anzuheben. Für ein sicheres Handhaben der offenen Faltschachteln ist eine Positionierung der Sauggreifer nahe der Schachtelkante von Vorteil. Erfindungsgemäß ist es besonders vorteilhaft, daß durch einen beweglichen Sauger durch eine Bewegung annähernd parallel zur Faltschachteloberfläche in Richtung des anderen Sauggreifers Querkräfte auf die nicht verschlossene Faltschachtel ausgeübt werden, die zu einer Verspannung derselben führen. Dies wird durch den Bewegungsablauf des beweglichen Saugers, der durch eine Schiebeeinrichtung gesteuert wird, realisiert. Die Schiebeeinrichtung kann dabei von einem Elektromotor, pneumatisch mit Hilfe eines Druckzylinders oder auf sonst bekannte Art und Weise aktiviert werden. Die Schiebeeinrichtung dient in erster Linie dazu, eine Querkraft auf die Deckel der Faltschachteloberfläche einwirken zu lassen, die eine Verspannung der Faltschachtel hervorruft. Da sich die Faltschachtel während des Anhebens leicht verformt, ist eine etwas höhere Verspannung für die freischwebende Kiste als für die stehende Kiste notwendig. Das heißt, daß die Verspannung durch eine kleine erneute Bewegung der Schiebeeinrichtung annähernd parallel zur Faltschachteloberfläche, die ein Annähern der Sauggreifer bewirkt, so daß die Querkraft erhöht wird, vergrößert wird. Hieraus ist ersichtlich, daß dafür gesorgt sein muß, daß die Verschiebeeinrichtung über ein genügend großes Spiel verfügen muß, damit die oben erläuterte Bewegung überhaupt möglich ist.

Es ist weiterhin möglich und in vielen Anwendungsbereichen auch vorteilhaft, eine zusätzliche Vorrichtung vorzusehen, die die zur Verspannung erforderliche Querkraft durch die Einwirkung einer zusätzlichen Kraft auf mindestens eine Seitenwand verstärkt. Dies würde sich beispielsweise bei an der Oberfläche leicht durchnäßten Kartons anbieten, da hier die Kräfte, die zur Verspannung führen, bei dem durch die leichte Nässe destabilierten Karton zu dessen Zerstörung führen könnten. Wird die zur Verspannung nötige Kraft jedoch durch Krafteinwirkung auf die Seitenwände erzeugt, so ist die erwähnte Gefahr nicht mehr gegeben. Allgemein führt diese Einrichtung zu einer noch sichereren Handhabung einer nicht verschlossenen Faltschachtel.

Das erfindungsgemäße Verfahren kann, z.B. mittels einer Vakuumvorrichtung mit mindestens zwei Sauggreifern, wobei es mindestens einem dieser Sauggreifer möglich ist, eine annähernd parallel zur Faltschachteloberfläche von der jeweiligen Faltschachtelkante nach innen gerichtete Kraft auf mindestens eine Deckelhälfte auszuüben, durchgeführt werden. Diese derart gerichtete Kraft bewirkt, daß die Faltschachtel eine Verspannung erfährt. Um die zur Verspannung nötigen Kräfte sicher auf die Schachtel zu übertragen, ist es zweckmäßig, einen Grundrahmen zu verwenden, an dem die Sauger angeordnet sind. Dadurch, daß die Sauger an diesem Rahmen fixiert sind, ist ihre Position in Bezug auf den Rahmen eindeutig definiert, was die Positionierung der Sauger auf den Schachteldeckeln erleichtert. Da die Schachtel in der Nähe der Schachtelkanten eine besonders hohe Stabilität aufweist und die Stellen nahe der Schachtelkante als Angriffspunkte für die Sauger, um eine Verspannung herbeizuführen, ideal sind, hat man mit dem Grundrahmen die Möglichkeit für eine feste Kartongröße, die den Abmessungen des Grundrahmens in etwa entspricht, einen sehr sicheren Halt zu ermöglichen, da eine Positionierung der Sauger nahe der Schachtelkante sehr einfach ist, falls Grundrahmen und Faltschachtel größenmäßig übereinstimmen. Damit die Sauggreifer nahe der Schachtelkante positioniert werden können, ist es zum einen möglich, Grundrahmen fester Größe, die jeweils für offene Faltkartons einer bestimmten Größe zu verwenden sind, zu gebrauchen, was sich empfiehlt, falls nur Schachteln einer bestimmten Größe verwendet werden. Zum anderen läßt sich auch der Grundrahmen so gestalten, daß er sich der Größe der Faltschachtel anpassen kann. Dies kann dadurch geschehen, daß der Grundrahmen in sich so verschiebbar gestaltet ist, daß er auf Länge und Breite der Faltschachtel eingestellt werden kann. Die Realisierung dieser Größeneinstellung gelingt mit Hilfe der hinlänglich bekannten Möglichkeiten, wie beispielsweise mittels ineinander gelagerter Rohre.

Es ist in der Praxis günstig, die Vakuumhubvorrichtung mit einem rechteckigem Grundrahmen derart zu gestalten, daß sich beide Sauggreifer nach erfolgter Positionierung annähernd parallel zur Faltschachteloberfläche von ihrer jeweiligen Deckelkante aus gesehen, nach innen verschieben können. Dabei sind die Schenkel parallel zur Deckelkante auf je einer Deckelseite nahe der Schachtelkante angeordnet. An den Schenkeln sind die Sauggreifer befestigt. Dabei ist darauf zu achten, daß mindestens einer der Sauggreifer bewegbar gestaltet sein soll, um die zur Verspannung nötigen Querkräfte aufzubringen.

Diese Anordnung ergibt sich ganz zwangsläufig aus der Form einer Faltschachtel und hat sich im Gebrauch als sehr zweckmäßig herausgestellt. Besonders günstig und alltagstauglich hat sich hierbei erwiesen, daß durch einen so ausgebildeten Grundrahmen die Möglichkeit besteht, die Sauggreifer beim Aufsetzen auf die Deckel der Faltschachteloberfläche parallel zur Deckelkante auf je einer Deckelseite nahe der Schachtelkante zu positionieren, was für einen sicheren Halt sorgt, weil die Faltschachtel in diesem Bereich stabiler als in anderen Bereichen ist und die Verspannung durch eine geringere Belastung der Faltschachtel erfolgen kann als bei anderen Angriffspunkten.

Die notwendigen Einrichtungen zur Automatisierung können selbstverständlich von den bereits bekannten Vakuumhubgeräten für verschlossene Faltschachteln übernommen werden. Die Einrichtungen zur Aufhängung des gesamten Sauggreifapparates und die Anschlüsse zu den Vakuumpumpen bzw. auch die direkte Befestigung der Pumpen an dem Grundrahmen verlaufen analog zu den bisher bekannten Gerätschaften für verschlossene Faltschachteln. Empfehlenswert ist eine zentrale Aufhängung an der Mittelachse, die problemlos in Bezug auf Aufbau und Gebrauch des Sauggreifers ist. Prinzipiell ist es auch möglich, daß die Verspannung der Faltschachtel nur durch Krafteinwirkung auf mindestens eine Seitenwand zustandekommt und der Hub der Faltschchtel durch mindestens einen Sauggreifer erfolgt. Diese Variante ist nur für freistehende Faltschachteln, nicht jedoch für palettierte zweckmäßig, kann jedoch für freistehende, unverschlossene Faltschachteln mit Erfolg angewandt werden. Eine Methode, die Kräfte auf die Faltschachtel zu übertragen, die zu einer Verspannung der oben erwähnten Art führen, ist es, mindestens einen der Sauger bewegbar zu gestalten.

Es können auch mehrere Sauger bewegbar gestaltet werden, die sich analog, wie vorher beschrieben, so bewegen können, daß eine durch die Bewegung wirkende Querkraft eine Verspannung der Faltschachtel hervorruft und so ein Handhaben der offenen Faltschachtel ermöglicht. Erfindungsgemäß ist die Zahl der Saugeinrichtungen nicht auf zwei beschränkt, sondern sie kann je nach Art des zu hebenden Gutes auch höher sein. In der Praxis hat sich jedoch die Kombination mit einem festen und einem beweglichen Sauger als ausgesprochen günstig erwiesen. Die Sauggreifer können vorteilhafterweise als Saugerleisten mit elastischer Gummilippe aufgebaut sein. Dadurch wird verhindert, daß während des Anhebevorganges der dicht abschließende Kontakt zwischen Gummilippen und Deckel der Faltschachtel durch die leichte Verformung des Deckels ein Leck bekommt und das Vakuum aufgefüllt wird, wodurch die Krafteinwirkung und damit der sichere Halt verloren gingen.

Gemäß einer weiteren Ausgestaltung läßt sich ein Sauggreifer als eine Leiste, die mit mehreren Saugnäpfen besetzt ist, aufbauen. Auch hier wird aus den oben angeführten Gründen auf elastische Gummilippen zurückgegriffen. Um hier für die nötige Griffsicherheit der Greifsauger zu sorgen, ist es notwendig, falls die Leiste nicht in ihrer Länge variabel gestaltet ist, daß Saugnäpfe, die keine völlige Überlappung mit der Faltschachteloberfläche haben, ausgeschaltet werden, um eine unnötige Belastung der Vakuumpumpen und ein Verschmutzen der nicht völlig bedeckten Sauggreifer durch Staub zu verhindern. Weiterhin kann die Verschiebeeinrichtung dazu verwendet werden, das Positionieren der Greifsauger nahe der Schachtelkanten zu realisieren, was selbstverständlich vor dem Aktivieren der Sauger geschieht, wobei aber darauf geachtet werden muß, daß immer ein bestimmtes Spiel vorhanden sein sollte. Damit die Scherbewegung der Schiebeeinrichtung problemlos erfolgen kann, ist es zweckdienlich, mindestens eine Führung für den beweglichen Sauggreifer vorzusehen, um ein Klemmen oder ein Querstellen zu verhindern, und somit für einen reibungslosen Arbeitsablauf zu sorgen. Aus der Praxis heraus hat sich ergeben, daß man bevorzugt mit zwei Führungen arbeitet, die eine einwandfreie Kraftübertragung auf den beweglichen Sauggreifer erlaubt.

Die Verwendung von Venturi-Düsen hat sich als geeignetes Mittel zur Erzeugung des Vakuums herausgestellt.

Ein Ausführungsbeispiel der Erfindung wird anhand der Figuren 1 bis 4 erläutert. Es zeigen:
- Fig. 1:: eine Faltschachtel 1,
- Fig.2:: den Aufbau einer Palette mit Faltschachteln 1,
- Fig.3:: eine Vakuumhubvorrichtung 7 mit einem rechteckigen Rahmen 8,
- Fig.4:: eine mit einer solchen Vorrichtung angehobene Schachtel 1.

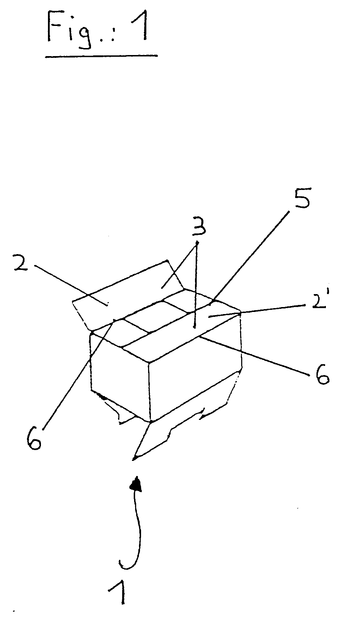

Fig. 1 zeigt eine Faltschachtel 1 mit den beiden Deckeln 2,2', die zusammen die Faltschachteloberfläche 3 bilden. Wesentlich für das Positionieren der Sauggreifer 4 ist die Deckelkante 5 und die Schachtelkanten 6, da aufgrund ihrer Lage sich die günstigsten Angriffspunkte der Sauggreifer 4 ergeben. Dies liegt daran, daß durch die erwähnten Kanten 5,6 die Faltschachtel 1 in verschiedene Bereiche unterteilt werden, die unterschiedliche Stabilität aufweisen.

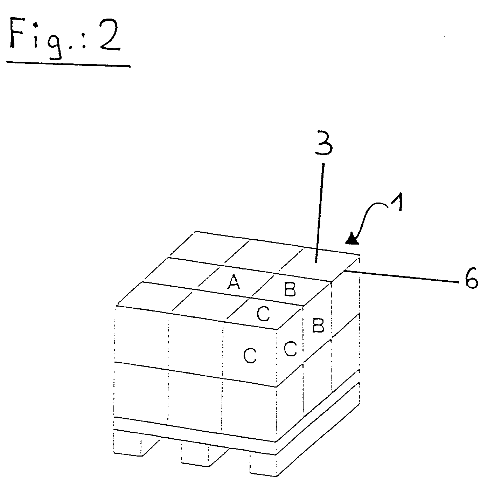

Fig. 2 zeigt den üblichen Aufbau einer Palette mit Faltschachteln 1. Man sieht, daß je nach Lage der Schachteln 1 der Zugriff auf eine Fläche A, auf zwei Flächen B oder auf drei Flächen C erfolgen kann. Das Problem ist natürlich, daß die Faltschachteln 1 nicht verschlossen sind, so daß wegen der damit verbundenen Forminstabilität eine Saugvorrichtung, die an den Seitenwänden angreift, nicht mit Erfolg beschieden wäre. Der Angriffspunkt für eine Vakuumhubvorrichtung 7, wie sie hier vorgesteltl wird, ist die Faltschachteloberfläche 3. Erst daddurch ist es möglich, eine Palette, die mit offenen Faltschachteln 1 beladen ist, ohne manuelle Entladetätigkeit zu depalettieren. Die zur Automatisierung notwendigen technischen Hilfen sind von den Apparaturen für geschlossene Faltschachteln bekannt und können ohne Aufwand auch in diesem Fall verwendet werden, da das Grundproblem ja der Zugriff auf die unverschlossenen Faltschachteln war, welcher aber durch das vorgestellte Vakuumhubgerät ermöglicht wird.

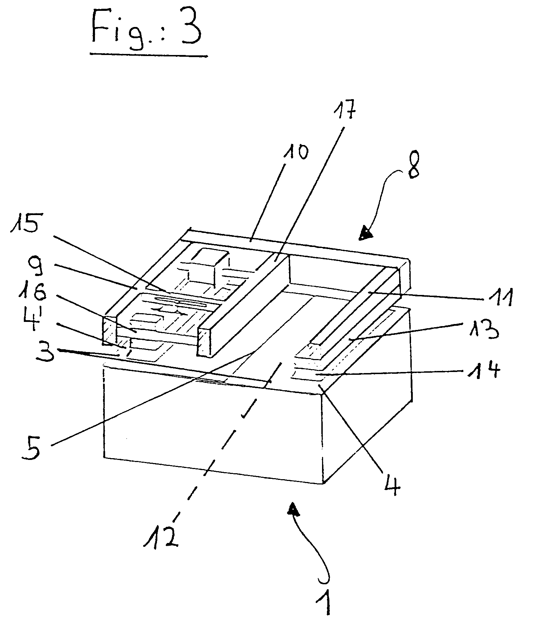

Fig. 3 zeigt den Aufbau des Vakuumhubgerätes 7, jedoch ohne auf die Aufhängung und auf den Anschluß näher eingehend, da diese Probleme auf dieselbe Art und Weise wie bei ähnlichen Geräten für verschlossene Faltschachteln gelöst werden können. Beispielhaft soll hier ein rechteckiger Grundrahmen 8 mit den Schenkeln 9, 10, 11, 12 dargestellt werden, wobei der Schenkel 12 zur besseren Übersicht nicht eingezeichnet ist.

Der Grundrahmen 8 ist so ausgebildet, daß er der Größe der zu hebenden Faltschachtel 1 insofern entspricht, als er ein, aus den bereits angegebenen Gründen notwendiges Positionieren der Sauggreifer 4, die hier beispielhaft als Saugerleisten 13 ausgebildet sind, nahe der Schachtelkanten 6 ermöglicht.

An den Schenkeln 9, 11 sind die Sauger 4 angeordnet, wobei der bewegbare Sauger 4 zwischen dem Mittelschenkel 17 und dem Schenkel 9 liegt. Der Sauger 4 ist aufgebaut aus einer Saugerleiste 13 mit elastischen Gummilippen 14.

Die Verschiebeeinrichtung 15 ermöglicht es, eine Kraft auf den bewegbaren Sauggreifer 4 auszuüben, und die Führung 16 sorgt für den störungsfreien Ablauf dieses Vorganges. Die Realisierung von Verschiebeeinrichtung 15 und Führung 16 erfolgt mit den bekannten Methoden des Standes der Technik.

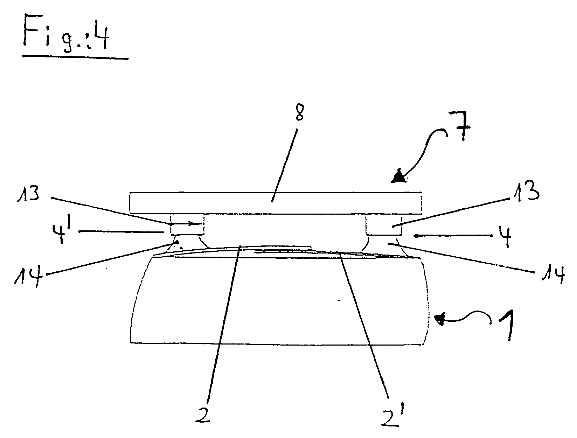

Fig. 4 zeigt die Schachtelaufnahme einer verspannten, nichtverschlossenen Faltschachtel 1. Dadurch, daß der bewegbare Sauggreifer 4 eine Kraft in Richtung des Sauggreifers 4 ausübt, wird die Faltschachtel 1 verspannt. Die Kraftwirkung ist durch den in der Fig. 4 plazierten Pfeil angedeutet. Die geringe Ausbeulung der Deckel 2,2', die entscheidend zu der sicheren Handhabung der unverschlossenen Faltschachtel 1 beitragen, fällt sofort ins Auge.

## Patentansprüche

1. Verfahren zum Heben von unverschlossenen Faltschachteln mit insbesondere mindestens zwei Deckelhälften (2,2') auf der Faltschachteloberfläche (3) bei dem Sauggreifer (4,4') auf die Deckel der unverschlossenen Faltschachtel aufgesetzt und durch Vakuum mit diesen verhaftet werden, **dadurch gekennzeichnet**, daß mindestens einer der am Deckel (2,2') verhafteten Sauggreifer (4',4') annähernd parallel zur Faltschachteloberfläche (3) von der jeweiligen Faltschachtelkante (6) nach innen verschoben wird und die Faltschachtel anschließend angehoben wird.

2. Verfahren nach Anspruch 1, **dadurch gekennzeichnet**, daß zu Beginn des Verfahrens die Sauggreifer (4,4') nahe der Faltschachtelkante (6) positioniert werden.

3. Verfahren nach Anspruch 1 oder 2, **dadurch gekennzeichnet**, daß nach dem Anheben der Faltschachtel eine kleine erneute Bewegung mindestens eines Sauggreifers (4,4') stattfindet.

4. Verfahren nach einem der vorangegangenen Ansprüchen, **dadurch gekennzeichnet**, daß eine weitere Vorrichtung an mindestens einer Seitenwand der Faltschachtel angreift.

## Claims

1. A method of lifting open folding boxes, more particularly having at least two half-lids (2, 2') on the top surface (3) of the box, wherein suction grippers (4, 4') are placed on the lids of the open folding boxes and stuck thereto by negative pressure, characterized in that at least one of the suction grippers (4, 4') sticking to the lid (2, 2') is moved inwards from the respective edge (6) of the box, approximately parallel to the top surface (3) of the box, after which the box is raised.

2. A method according to claim 1, characterized in that at the beginning of the process, the suction grippers (4, 4') are positioned near the edge (6) of the box.

3. A method according to claim 1 or 2, characterized in that after the box has been raised, a small additional movement of at least one suction gripper (7, 7') occurs.

4. A method according to any of the preceding claims, characterized in that an additional device engages at least one side wall of the box.

## Revendications

1. Procédé pour soulever des emballages pliés, non fermés, avec en particulier au moins deux moitiés de couvercle (2, 2') sur la face supérieure (3) de l'emballage plié, dans le cas duquel on pose des dispositifs de préhension par aspiration (4, 4') sur les couvercles de l'emballage plié, non fermé, et on assure l'adhérence avec ceux-ci en faisant le vide, procédé caractérisé en ce qu'au moins l'un des dispositifs de préhension par aspiration (4, 4'), qui adhère aux couvercle (2, 2'), est déplacé à peu près parallèlement à la face supérieure de l'emballage plié (6) vers l'intérieur et en ce qu'on soulève ensuite l'emballage plié.

2. Procédé selon la revendication 1, caractérisé en ce qu'au début du procédé les dispositifs de préhension par aspiration (4, 4') sont mis en place à proximité de l'arête (6) de l'emballage plié.

3. Procédé selon la revendication 1 ou 2, caractérisé en ce qu'après le soulèvement de l'emballage plié a lieu un petit mouvement renouvelé d'au moins un dispositif de préhension par aspiration (4, 4').

4. Procédé selon l'une des revendications précédentes, caractérisé en ce qu'un autre dispositif vient en prise sur au moins une paroi latérale de l'emballage plié.
